# EUROPEAN PATENT APPLICATION

(11) **EP 1 793 312 A2**
(43) Date of publication of application: **06.06.2007**
(21) Application number: 06256026.3
(22) Date of filing: 24.11.2006
(51) Int. Cl.: G06F 11/00

(54) **Electronic apparatus and data processing method with protection against write failure**

(30) Priority: 28.11.2005 JP 2005342512
(71) Applicant: ORION ELECTRIC CO., Ltd., Fukui 915-8555 (JP)
(72) Inventor: Aoyama, Shin'ichi c/o Orion Electric Co. Ltd., Echizen-city, Fukui 915-8555 (JP); Yamauchi, Tomonori c/o Orion Electric Co. Ltd., Echizen-city, Fukui 915-8555 (JP)
(74) Representative: Paget, Hugh Charles Edward

(57) **Abstract**

The invention provides an electronic apparatus and data processing method thereof which is possible to read controllable data even if a write error occurs in the process of writing data into a nonvolatile memory. Calculation processing is performed so as to add "1" at the time of writing data into an EEPROM 15, and calculation processing is performed so as to subtract "1" at the time of reading data from the EEPROM 15. Thereby, even if an error occurs at the time of writing data into the EEPROM 15, calculation processing is performed so as to subtract "1" at the time of reading data from the EEPROM 15, thus making it possible to read controllable data.

## Description

### BACKGROUND OF THE INVENTION

### Field of the Invention

The present invention relates to an electronic apparatus and a data processing method thereof, and specifically to an electronic apparatus and a data processing method thereof for preventing a control failure or the like due to a write error of data stored in a nonvolatile memory.

### Description of the Related Art

A rewritable nonvolatile memory such as an EEPROM (Electrically Erasable Programmable Read-Only Memory) can retain and rewrite storage contents even when the power is off, and therefore has conventionally been used in many electronic apparatuses with microcomputers. Most of such electronic apparatuses are configured so as to set operating states at power-on or reset in accordance with data stored in nonvolatile memories included in the apparatuses. For example, a television set stores in a nonvolatile memory, regional channels that can be received, the volume and channel when the power is turned off, and control values (data) such as screen brightness, color intensity, the size and position of the screen, distortion adjustment values.

If an apparatus that performs such an operation reads the same data that the apparatus has written in a nonvolatile memory, the apparatus starts operation continuing a state before a nonoperating period. However, if disturbance such as noise or failure of the nonvolatile memory itself occurs at the time of reading data from the nonvolatile memory, the apparatus may read in error some bits of the data stored in units of several bits. An error in reading numeric data stored in the memory due to such failures may cause a lot of damage to the apparatus. A technique for addressing such a problem is disclosed in Japanese Patent Application Laid-Open No. 7-219855 (patent document 1) as follows. In the operation of a CPU in a data recording apparatus described in patent document 1, when the CPU writes data for defining the operating condition of the apparatus into a nonvolatile memory, the CPU also writes data obtained by rotating the original data by 1 bit and data obtained by rotating the original data by 2 bits. After reading data, the CPU creates three pieces of data in which the rotated two pieces of data are rotated in the reverse direction. Only if the created three pieces of data coincide with each other, the CPU treats the data as data.

In the data recording apparatus described in patent document 1, if the created three pieces of data do not coincide with each other due to the occurrence of a failure of an input-output buffer, it is determined that the data in the nonvolatile memory is invalid, and data indicative of the occurrence of a failure is outputted. For example, since a television set incorporating the microcomputer performs various kinds of control associated with display in accordance with data stored in a nonvolatile memory when the power is turned on, even image display may be disabled. That is, if a write failure occurs under the influence of a lighting strike, a power failure, or the like in the process of writing data into the nonvolatile memory, data in the nonvolatile memory is replaced in a random manner. In general, "00000000" or "11111111" (in the case of 8 bits) is substituted for written data. In the case where "11111111" is substituted for data in the nonvolatile memory, data "11111111" corresponds to "255" (in decimal notation) and is replaced with a proper value (such as a mid-value of 50), which does not cause difficulty in displaying video. However, in the case where"00000000" is substituted for data in the nonvolatile memory, data is read as 0 (in decimal notation). For example, assume that the effective range varies from 0 to 99 (in decimal notation). Since the read data is within the effective rang, an adjustment value that is data for controlling, e.g., screen brightness as a control item becomes 0. Accordingly, there may occur a phenomenon that the screen goes black and blank.

### SUMMARY OF THE INVENTION

The present invention has been made in view of the above problem, and it is an object of the invention to provide an electronic apparatus and a data processing method thereof capable of reliably controlling the operation of a control item even if a write error occurs in the process of writing data into a nonvolatile memory.

An electronic apparatus according to aspect 1 includes a nonvolatile memory that is rewritable, and calculation means for performing first calculation processing on data to be written into the nonvolatile memory and performing second calculation processing on the data at the time of reading the data from the nonvolatile memory, wherein the first calculation processing by the calculation means is performed by replacing a value of at least a part of data having a predetermined number of bits and the second calculation processing is performed by converting data substituted through the first calculation processing to an original value.

With the configuration of aspect 1, even if a write failure occurs under the influence of a lighting strike, a power failure, or the like in the process of writing into the nonvolatile memory and data in the nonvolatile memory is replaced with "00000000" for example, at the time of reading data from the nonvolatile memory the calculation means performs the second calculation processing for converting data substituted through the first calculation processing to the original value so that a part value to be replaced through the first calculation processing are changed, thus preventing data from being read as 0 (in decimal notation). Further, if the writing into the nonvolatile memory is performed normally, the read data coincides with the written data; therefore, the adjustment value does not change.

A data processing method of an electronic apparatus according to aspect 2 is characterized in that the first calculation processing and the second calculation processing are addition and subtraction operations or an exclusive-OR operation in the electronic apparatus according to aspect 1.

With the configuration of aspect 2, a value of at least a part of data to be written into the nonvolatile memory is replaced through addition and subtraction operations or an exclusive-OR operation, and when data is read from the nonvolatile memory, data substituted through the addition and subtraction operations or the exclusive-OR operation is converted to the original value.

The electronic apparatus according to aspect 1 includes a nonvolatile memory that is rewritable, and calculation means for performing first calculation processing on data to be written into the nonvolatile memory and performing second calculation processing on the data at the time of reading the data from the nonvolatile memory, wherein the first calculation processing by the calculation means is performed by replacing a value of at least a part of data having a predetermined number of bits and the second calculation processing is performed by converting data substituted through the first calculation processing to an original value. Thus, even if a write failure occurs under the influence of a lighting strike, a power failure, or the like in the process of writing into the nonvolatile memory, data is not read as 0 (in decimal notation) from the nonvolatile memory, thereby making it possible to read controllable data. Further, if the writing into the nonvolatile memory is performed normally, the read data coincides with the written data; therefore, the adjustment value does not change.

The data processing method of an electronic apparatus according to aspect 2 is characterized in that the first calculation processing and the second calculation processing are addition and subtraction operations or an exclusive-OR operation in the electronic apparatus according to aspect 1. Therefore, a value of at least a part of data to be written into the nonvolatile memory is replaced through addition and subtraction operations or an exclusive-OR operation, and when data is read from the nonvolatile memory, data substituted through the addition and subtraction operations or the exclusive-OR operation is converted to the original value.

### BRIEF DESCRIPTION OF THE DRAWINGS

FIG. 1 is a block diagram showing a schematic configuration of one system of a television set according to the present invention;
FIG. 2 is a flowchart showing a write operation at the time of initial setting in the system of the television set according to the invention;
FIG. 3 is a flowchart showing a write operation at the time of adjustment setting in the system of the television set according to the invention;
FIG. 4 is a flowchart showing an operation at the time of reading in the system of the television set according to the invention;
FIG. 5 is an explanatory diagram showing a write procedure and a read procedure at the time of occurrence of a write error in the system of the television set according to the invention;
FIG. 6 is an explanatory diagram showing a write procedure and a read procedure at the time of a normal operation in the system of the television set according to the invention;
FIG. 7 is an explanatory diagram showing a write procedure and a read procedure at the time of occurrence of a write error in performing an exclusive-OR operation in the system of the television set according to the invention; and
FIG. 8 is an explanatory diagram showing a write procedure and a read procedure at the time of a normal operation in performing an exclusive-OR operation in the system of the television set according to the invention.

### DETAILED DESCRIPTION OF THE PREFERRED EMBODIMENTS

Hereinafter, an embodiment as the best mode for carrying out the present invention, which is applied to a television set as an electronic apparatus of the invention, will be described with reference to the accompanying drawings. Needless to say, the invention is easily applicable to configurations other than that described in the embodiment within the scope of the invention.

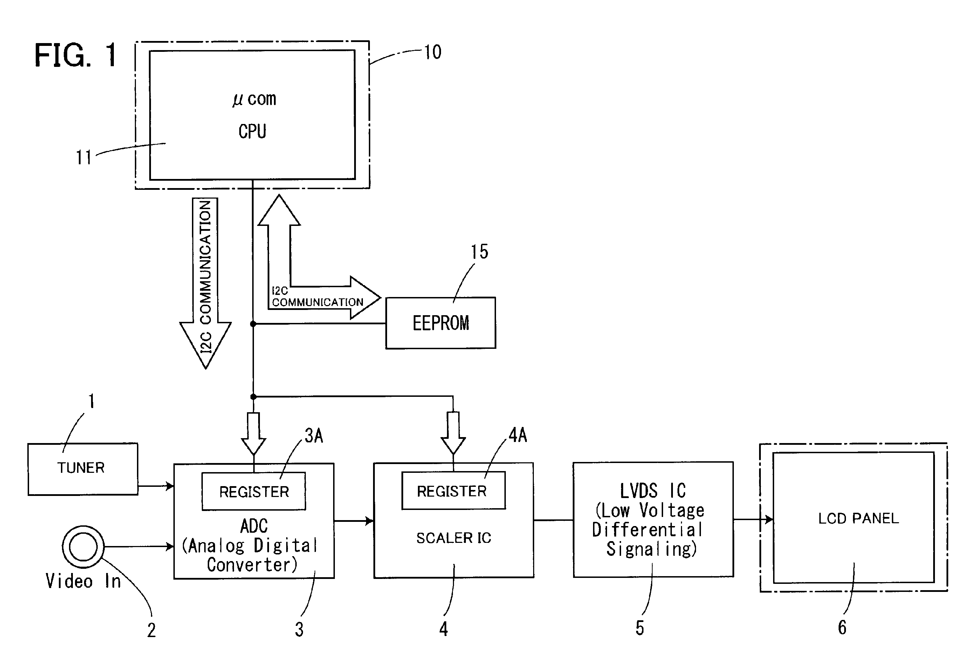

FIGS. 1 to 8 show a first embodiment of the invention. FIG. 1 is a block diagram showing a schematic configuration of one system of a television set as an electronic apparatus of this embodiment. In FIG. 1, reference numeral 1 denotes a tuner; 2, an external input terminal for video signals; 3, an A/D converter; 4, a scaler IC; 5, an LVDS (Low Voltage Differential Signaling) IC; and 6, an LCD (Liquid Crystal Display) panel as a display section. The A/D converter 3 converts an analog signal inputted from the tuner 1 or the external input terminal 2 into a digital signal, the scaler IC 4 scales the digitized signal, the LVDS IC 5 converts the scaled signal into LVDS format, and the LCD panel 6 displays it.

A microcomputer 10 includes a CPU 11 and connects to an operation panel and a remote control receiver (not shown). The microcomputer 10 performs control based on data written in an EEPROM 15 as a nonvolatile memory in response to an operation input from the operation panel and a remote control according to a program. The EEPROM 15 stores various kinds of data necessary for the control of video etc. of the television set. The CPU 11 is connected via a line 20 to the EEPROM 15, a register 3A of the A/D converter 3, and a register 4A of the scaler IC 4. The CPU 11 reads data written in the EEPROM 15 and writes the data into the register 3A of the A/D converter 3 and the register 4A of the scaler IC 4, thereby controlling the A/D converter 3 and the scaler IC 4.

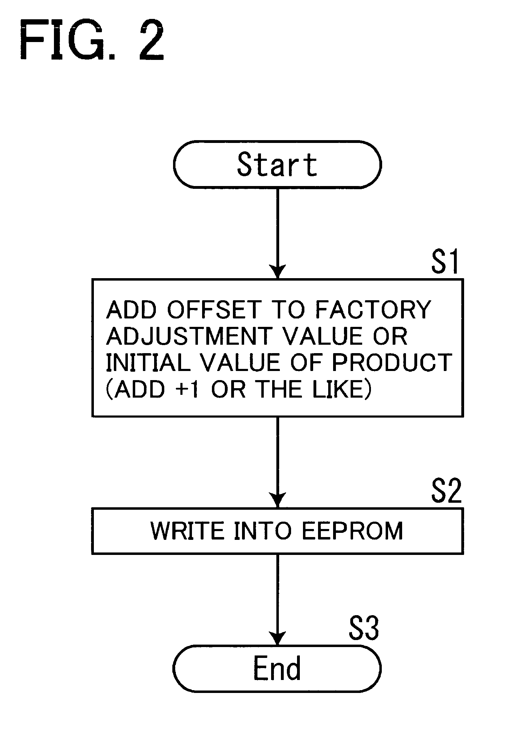

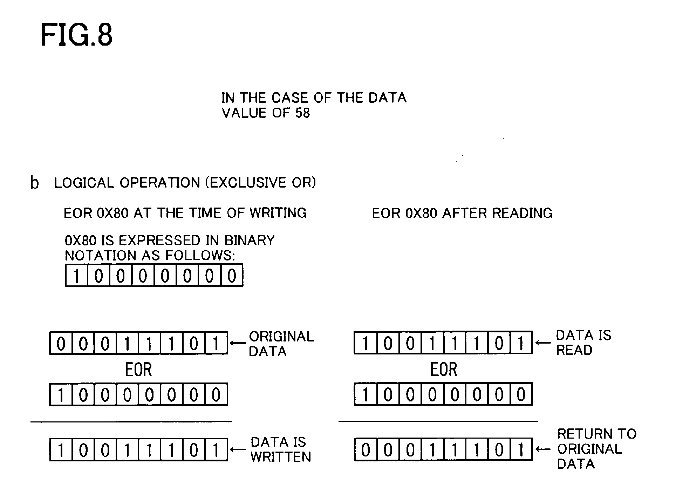

In this embodiment configured as described above, as shown in a flowchart of FIG. 2, 8-bit data is written into the EEPROM 15 for adjustment of volume, screen brightness, color intensity, the size and position of the screen, etc. beforehand at factory shipment of the television set. At this time, as shown in step S1, the CPU 11 performs the first calculation processing for adding an offset such as "1" to an initial setting value for each adjustment, and then writes the resulting data into the EEPROM 15 (step S2 and S3). Although the offset value is not limited to "1" and is arbitrary, it is preferably "1" for simplicity of calculation processing.

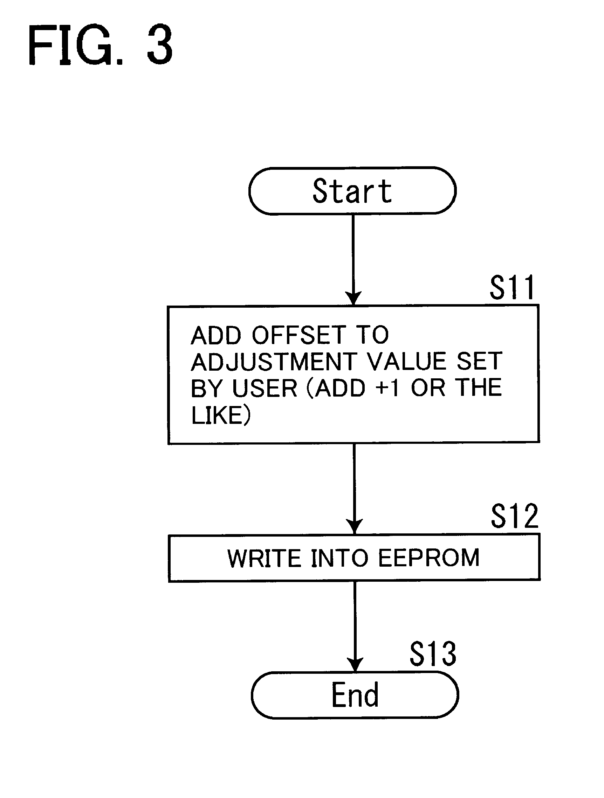

A user that has purchased the television set shipped with initial setting values written as shown in FIG. 2 sets volume, screen brightness, color intensity, the size and position of the screen, and the like to preference levels. A write operation at the time of the user's setting will be described with reference to a flowchart of FIG. 3. A setting value by the user is written into the EEPROM 15 as in the case of the writing of an initial setting value shown in FIG. 2, and the procedure thereof is the same as that of the flowchart shown in FIG. 2. At the time of writing data into the EEPROM 15, the CPU 11 performs the first calculation processing for adding an offset such as "1" to an adjustment value for each adjustment, and then writes the resulting data into the EEPROM 15 (steps S11 to S13).

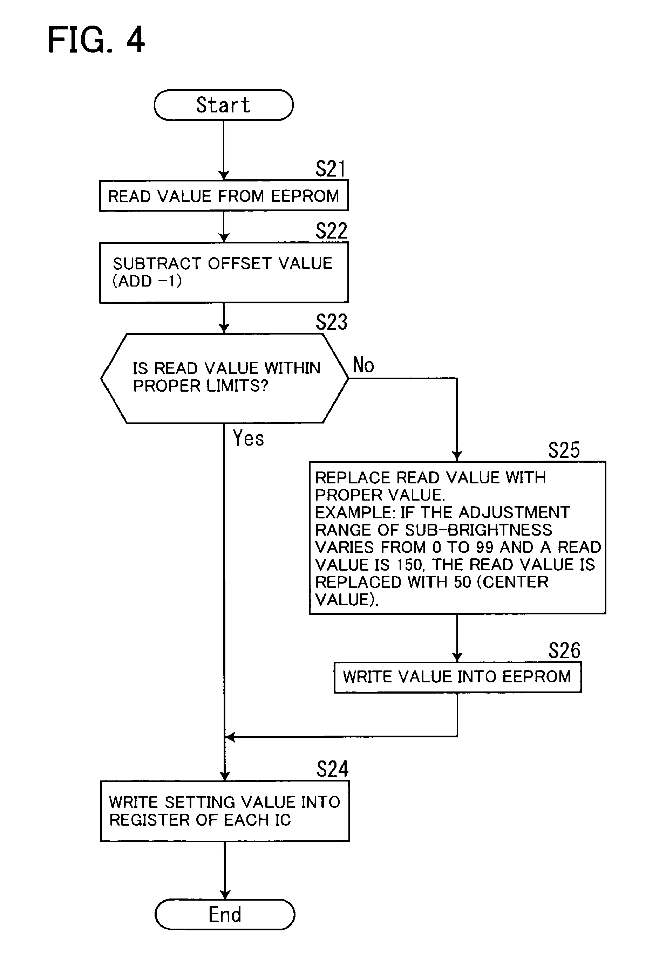

Next, a read operation of data written in the EEPROM 15 will be described with reference to a flowchart of FIG. 4. The read operation of the EEPROM 15 is performed when the CPU 11 receives a request for the reading of the EEPROM 15 at power-on. The CPU 11 first reads data from the EEPROM 15 (step S21), and then performs the second calculation processing for subtracting the offset value, i.e., "1" added at the time of the writing (step S22). The CPU 11 reads data thus subjected to the second calculation processing and determines whether the read value is within the proper limits (step S23). As a result, if the read value is within the limits, the process proceeds to step 24, where the CPU 11 writes it into the register 3A of the A/D converter 3 and the register 4A of the scaler IC 4. If the read value is beyond the limits, the CPU 11 replaces the read value with a proper value in step 25. In such a case where the read value is 150 whereas the effective range of adjustment values of sub-brightness (screen brightness) varies from 0 to 99, the CPU 11 replaces the read value with the mid-value of 50, writes it into the EEPROM 15 (steps S25 and S26), and then writes it into the register 3A of the A/D converter 3 and the register 4A of the scaler IC 4 (step 24), thereby controlling the A/D converter 3 and the scaler IC 4.

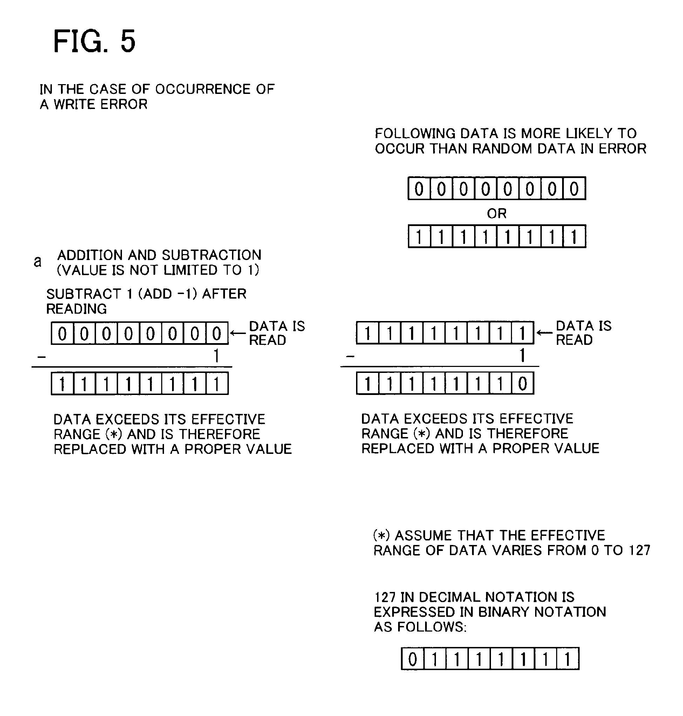

As described above, the CPU 11 performs calculation processing so as to add "1", and writes the resulting data into the 8-bit EEPROM 15. However, when a write error occurs due to a lighting strike, a power failure, or the like, "00000000" or "11111111" (in binary notation) is often substituted for written data as shown in FIG. 5. As described above, the CPU 11 performs calculation processing so as to subtract "1" at the time of reading data from the EEPROM 15. Therefore, the substituted data of "00000000" is read as "11111111", and the substituted data of "11111111" is read as "11111110". For example, assume that the effective range of adjustment values of a control item varies from 0 to 127. Since "11111111" corresponds to 255 in decimal notation and "11111110" corresponds to 254, they are replaced with the mid-value of 64, which is written into the EEPROM 15. Thus, even if data in the EEPROM 15 is replaced with "00000000" due to a write error, the substituted data is not read as "00000000", thereby making it possible to read a reliably controllable value.

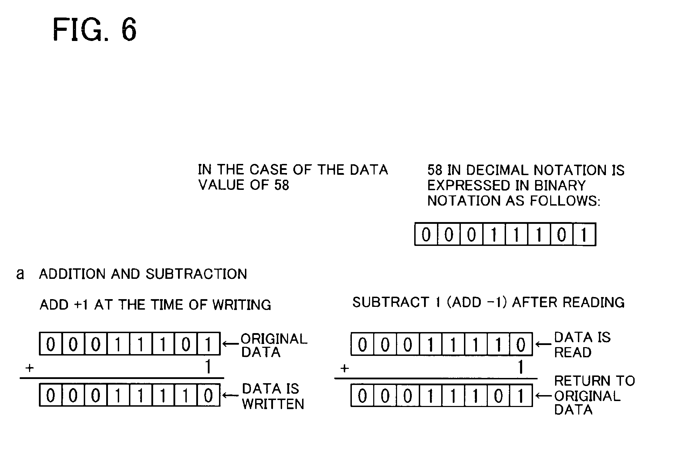

Further, assume that the user performs an arbitrary adjustment and the CPU 11 writes data in the EEPROM 15 normally without a write error. As shown in FIG. 6, in the case where the user sets data to e.g., an adjustment value "58" (in decimal notation) for e.g., adjustment, the adjustment value "58" is written into the EEPROM 15 as "00011101" in binary notation. At this time, the CPU 11 performs calculation processing so as to add "1", and writes the data of "00011110" into the EEPROM 15. At the time of reading, the CPU 11 performs calculation processing so as to subtract "1", thereby obtaining the original data of "00011101", i.e., 58 which is therefore read as control data set by the user. Thus, it becomes possible to perform control as set by the user.

As described above, according to this embodiment, even if "00000000" is substituted for written data due to a write error, the CPU 11 performs calculation processing so as to subtract "1" at the time of reading data from the EEPROM 15, thereby making it possible to read controllable data. Further, in the case where writing is performed normally without a write error, the CPU 11 performs calculation processing so as to add "1" at the time of writing, and performs calculation processing so as to subtract "1" at the time of reading. As a result, the read data returns to the original adjustment value so that the adjustment value set by the user can be maintained without change and therefore adjusted.

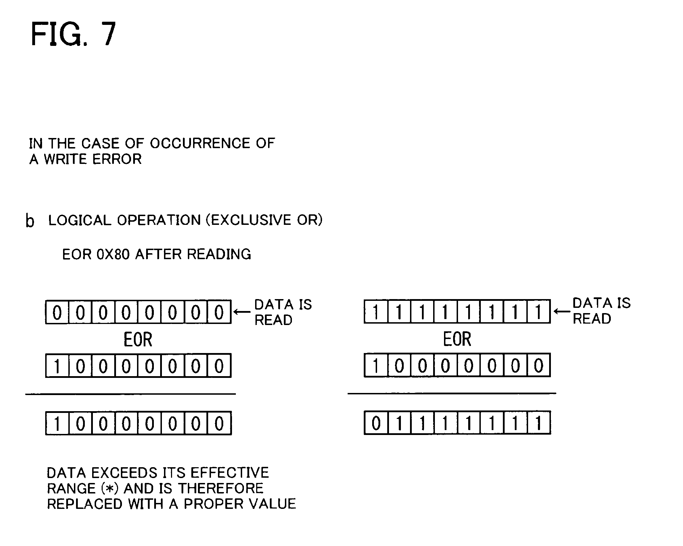

While an embodiment of the invention has been described in detail, the invention is not limited thereto and can be modified in various ways without departing from the spirit of the invention. For example, in the above-described embodiment, the CPU 11 performs calculation processing so as to add "1" at the time of writing data into the EEPROM 15, and performs calculation processing so as to subtract "1" at the time of reading data from the EEPROM 15. However, the offset value is not limited to "1" but may be any value. Further, in this embodiment, the offset value is added at the time of writing and subtracted. However, as shown in FIGS. 7 and 8, an exclusive-OR operation may be used as the calculation. That is, when a write error occurs, "00000000" or "11111111" (in binary notation) is often substituted for written data as shown in FIG. 7. In this case, at the time of reading data from the EEPROM 15, the CPU 11 performs exclusive-OR operation processing of eor 0x80 (the most significant bit is set to 1 at the writing and set to 0 at the reading). Therefore, the substituted data of "00000000" is read as "10000000", and the substituted data of "11111111" is read as "01111111", thus enabling an adjustment item to be controlled. Further, assume that the CPU 11 writes data in the EEPROM 15 normally as shown in FIG. 8. In the case where the user sets data to e.g., an adjustment value "58" (in decimal notation), the adjustment value is written into the EEPROM 15 as "00011101". At this time, the CPU 11 performs exclusive-OR operation processing of eor 0x80 so that the data of "10011101" is written into the EEPROM 15. At the time of reading, the CPU 11 performs exclusive-OR operation processing of eor 0x80, thereby obtaining the original data of "00011101", i.e., 58 which is therefore read as control data set by the user. Thus, it becomes possible to perform control as set by the user. The calculation processing at time of the writing and the reading is not limited to addition and subtraction operations or exclusive-OR operation processing, and it is essential only that the CPU perform calculation processing for substituting data other than 0 (in decimal notation) at the time of reading, even if a write error occurs. Further, the offset value in the addition and subtraction operations is not limited to 1. Furthermore, the CPU may perform an exclusive-OR operation of e.g., 0xc0 (the upper 2 bits are set to 1 at the writing and set to 0 at the reading) other than eor 0x80. While the above-described embodiment has described the 8-bit EEPROM 15, the present invention is not limited to 8-bit data and can be applied to 16-bit data or the like.

## Claims

1. An electronic apparatus comprising:
a nonvolatile memory that is rewritable; and
calculation means for performing first calculation processing on data to be written into the nonvolatile memory and performing second calculation processing on the data at the time of reading the data from the nonvolatile memory,
wherein the first calculation processing by the calculation means is performed by replacing a value of at least a part of data having a predetermined number of bits and the second calculation processing is performed by converting data substituted through the first calculation processing to an original value.

2. A data processing method of an electronic apparatus wherein the first calculation processing and the second calculation processing are addition and subtraction operations or an exclusive-OR operation in the electronic apparatus according to claim 1.
